# EUROPÄISCHE PATENTSCHRIFT

(11) **EP 3 990 793 B1**
(45) Veröffentlichungstag und Bekanntmachung des Hinweises auf die Patenterteilung: **09.08.2023**
(21) Anmeldenummer: 20730567.3
(22) Anmeldetag: 25.05.2020
(51) Int. Cl.: F16C 33/58, F16C 33/66

(54) **ÖLGERÄUMTE ELEKTRISCHE MASCHINE MIT WÄLZLAGER FÜR EIN KRAFTFAHRZEUG**
OIL-EVACUATED ELECTRICAL MACHINE HAVING ROLLING BEARINGS, FOR A MOTOR VEHICLE
MOTEUR ÉLECTRIQUE VIDANGÉ COMPRENANT UN PALIER À ROULEMENT POUR UN VÉHICULE À MOTEUR

(30) Priorität: 25.06.2019 DE 102019117071
(43) Veröffentlichungstag der Anmeldung: 04.05.2022
(73) Patentinhaber: Schaeffler Technologies AG & Co. KG, 91074 Herzogenaurach (DE)
(72) Erfinder: FISCHER, Alexandre, 67000 Strasbourg (FR); FRITZ, Thomas, 76287 Rheinstetten (DE); KESKINOGLU, Andreas, 67000 Strasbourg (FR)
(86) Internationale Anmeldenummer: PCT/DE2020/100441
(87) Internationale Veröffentlichungsnummer: WO 2020/259742

(56) Entgegenhaltungen:
- EP-A1- 1 541 884
- EP-A1- 2 177 777
- WO-A1-2014/090251
- WO-A1-2015/072471
- JP-A- S61 116 123
- JP-A- 2014 163 485
- JP-B2- 5 212 142
- JP-U- S5 543 357
- US-A1- 2009 101 424
- US-A1- 2017 063 191

## Beschreibung

Die Erfindung betrifft eine elektrische Maschine für eine elektrisch betreibbare Achse eines Kraftfahrzeugs. Dabei umfasst die elektrische Maschine eine Welle, die durch mindestens ein Wälzlager drehbar gelagert ist.

Das Anwendungsgebiet der Erfindung erstreckt sich vornehmlich auf elektrische Maschinen mit Wälzlager, die in zumindest teilweise oder vollständig elektrisch angetriebenen Kraftfahrzeugen, verbaut werden. Unter einem zumindest teilweise oder vollständig elektrisch angetriebenem Kraftfahrzeug ist ein Mild-Hybrid-, Voll-Hybrid-, Plug-In-Hybrid- oder Elektrofahrzeug zu verstehen. Unter einer elektrischen Maschine ist ein elektrischer Motor mit einem Stator und einem Rotor zu verstehen.

Weiterhin betrifft die Erfindung eine elektrisch betreibbare Achse für ein Kraftfahrzeug mit einer elektrischen Maschine.

Insbesondere im Bereich der Elektromobilität entstehen Anforderungen infolge geänderter Nutzungsprofile im Vergleich zu konventionellen Antriebskonzepten. So stellen für Elektrofahrzeuge beispielsweise höhere Nutzungsdauern, beispielsweise infolge verstärkter Car-Sharing Nutzung, eine erhöhte Anforderung an die resultierende Lagerung. Hierbei sind sowohl öl- als auch fettgeschmierte Wälzlager von Bedeutung. Die elektrische Maschine kann in elektrischen, also elektrisch betriebenen, Achse integriert sein. Im Falle der Integration in ein Getriebe handelt es sich um elektrifizierte Getriebe.

Bei vorbekannten elektrischen Maschinen sammelt sich allerdings Öl als Fluid im Lagerbereich an. Gemeinsam mit dem Öl können sich Schmutz, Partikel und Abrieb sammeln. Dies kann zu Beschädigungen des Lagers führen. Außerdem entsteht in diesem Bereich eine höhere Temperatur was ebenso zu Beschädigungen führen kann. Weiterhin ist durch den hohen Integrationsgrad von Kraftfahrzeugkomponenten der Bauraum für alle Komponenten und konstruktive Lösungen stark begrenzt. Demzufolge ist eine bauraumgünstige Lösung vorteilhaft.

Die Schriften WO2015/072471 A1 und EP1541884 zeigen Vorrichtungen zur Zuführung von Fluid bzw. Entlüftung aufgrund von thermischer Expansion in Lagerstellen. Eine elektrische Maschine gemäß dem Oberbegriff des Anspruch 1 ist aus der JP S61 116123 A hinsichtlich Längsausnehmung am äußeren Umfang eines Lagerrings parallel zur Drehachse sowie in Kombination mit der JP 5 212142 B2 hinsichtlich Längsausnehmung an einer Stirnseite des Lagerrings bekannt.

Auch sind weitere Randbedingungen kritisch, beispielsweise hohe Drehzahlen, hohe Leistungen und hohe Betriebstemperaturen. Weiterhin zu berücksichtigen ist die Vielfalt von Anwendung, die sich nur durch die Länge des Rotors der elektrischen Maschine oder durch die Getriebeschnittstelle unterscheiden. Diese Randbedingungen fordern eine flexible, insbesondere baukastenkompatible, und kostengünstige Lösung.

Beispielhaft zu überwindende Nachteile sind insbesondere der Sammelpunkt für Schmutz, Partikel und Abrieb, hohe Temperatur im Lagerbereich, hohe Kosten beim Austausch des Lagers und eine aufwendige Instandsetzung des Lagers.

Es ist somit Aufgabe der Erfindung eine verbesserte elektrische Maschine und eine verbesserte elektrische Achse mit einer elektrischen Maschine zu schaffen.

Die Lösung der Aufgabe erfolgt erfindungsgemäß durch eine elektrische Maschine und eine elektrische Achse mit den Merkmalen der unabhängigen Ansprüche. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Die Erfindung betrifft somit eine elektrische Maschine für eine elektrisch betreibbare Achse eines Kraftfahrzeugs, aufweisend eine Welle mit einer Drehachse, mindestens ein Lager, wobei die Welle durch das mindestens eine Lager drehbar gelagert ist, mindestens ein Lagerschild, mindestens einen Lagerring, der koaxial zur Drehachse angeordnet ist, wobei das mindestens eine Lager über den Lagerring mit dem Lagerschild verbunden ist, und wobei der Lagerring außenseitig mindestens eine Längsausnehmung zur Fluidräumung aufweist.

Erfindungsgemäß ist vorgesehen, dass die mindestens eine Längsausnehmung am äußeren Umfang des Lagerrings parallel zur Drehachse verlaufend angeordnet ist oder dass die mindestens eine Längsausnehmung an einer Stirnseite des Lagerrings senkrecht zur Drehachse verlaufend angeordnet ist. Hierdurch bildet sich Stau- und Durchflussraum für sich ansammelndes Fluid, wobei dieses Fluid mit Abriebmitteln verunreinigt sein kann. Hierdurch wird mit einfachen und kostengünstigen Mitteln eine komponentenschonende Lösung ermöglicht.

Weiterhin betrifft die Erfindung eine elektrisch betreibbare Achse für ein Kraftfahrzeug mit einer vorgenannten elektrischen Maschine.

Die Räumung beziehungsweise Ableitung eines Fluides, insbesondere eines Öls, aus einem Bereich eines Lagers, also aus einem Lagerbereich, innerhalb der elektrischen Maschine wird durch Ausnehmungen, beispielsweise Nuten beziehungsweise Kanäle, in einem Lagerring ermöglicht. Durch die Ausnehmungen im Lagerring kann das Fluid beispielsweise in eine Sammelausnehmung eines Lagerschilds fließen, unabhängig von der Position des Lagerrings. Der Lagerring kann durch eine Zentrierfläche auf einem Lagerschild positioniert werden. Das Fluid kann durch ein Loch in dem Lagerschild abfließen und sammelt sich somit nicht im Bereich des Lagers an. Die erfinderische Lösung ermöglicht insbesondere eine kosteneffiziente und bauraumkompakte Lösung, die für das Räumen von Fluid, insbesondere Öl, im Bereich des Lagers einsetzbar ist. Das Lager ist bevorzugt ein Wälzlager, besonders bevorzugt ein Kugellager. Außerdem ermöglicht die erfindungsgemäße Lösung eine hohe Flexibilität und kann in unterschiedlichen elektrischen Maschinen verbaut werden, die sich entweder durch die aktive Länge, beziehungsweise Leistung, und/oder durch die Getriebeschnittstelle unterscheiden. Vorteilhaft ist weiterhin die zuverlässige Funktion der elektrischen Maschine.

Eine elektrische Maschine ist eine in der elektrischen Energietechnik eingesetzte Maschine und stellt eine Form von Energiewandler dar. Es wird unterschieden zwischen rotierenden elektrischen Maschinen, dazu zählen verschiedene Typen von Elektromotoren und elektrischen Generatoren, und ruhenden elektrischen Maschinen, zu denen Transformatoren gehören. Allen elektrischen Maschinen gemeinsam ist, dass sie in ihrem Aufbau über einen magnetischen Kreis verfügen, der für die Funktion wesentlich ist.

Elektrische Maschinen nutzen die Eigenschaften der elektromagnetischen Wechselwirkung und basieren auf der elektromagnetischen Induktion und magnetischen Kraftwirkungen, die durch die Lorentzkraft, und bei einigen Maschinentypen durch die Reluktanzkraft, beschrieben werden.

Zu der Gruppe der ruhenden oder statischen elektrischen Maschinen zählen aus historischen Gründen Transformatoren, und da insbesondere Transformatoren, die im Bereich der elektrischen Energietechnik, wie etwa die Leistungstransformatoren, eingesetzt werden. Bei ruhenden elektrischen Maschinen spielen die magnetischen Kraftwirkungen nur eine untergeordnete bzw. unerwünschte Rolle, da dabei keinerlei Bewegungen ausgeführt werden und die Funktion eines Transformators darin besteht, Wechselspannungen zwischen verschiedenen hohen Spannungsniveaus zu transformieren. Bei dem wesentlich größeren und im Folgenden ausschließlich dargestellten Gebiet der rotierenden elektrischen Maschinen, die durch eine Vielzahl verschiedener Bauformen und Einsatzbereiche geprägt sind, spielen die magnetischen Kraftwirkungen die zentrale Rolle. Sie dienen der Umsetzung elektrischer Leistung in mechanische Leistung an einer Welle. Wird elektrische Leistung in mechanische Leistung umgesetzt, spricht man von einem Elektromotor, wird in der Gegenrichtung mechanische Leistung in elektrische Leistung umgeformt, spricht man von einem elektrischen Generator. Einige elektrische Maschinentypen können sowohl als Motor als auch als Generator betrieben werden, die konkrete Funktion wird durch den Betriebsbereich der Maschine bestimmt.

Elektrische Maschinen haben verschiedenartig angeordnete Drahtspulen, die vom elektrischen Strom durchflossen werden. Der dabei auftretende magnetische Fluss wird in einem Eisenkern, der auch als magnetischer Kreis bezeichnet wird, gezielt geführt. Dieser Kern besteht aus Materialien, die den magnetischen Fluss leiten können, beispielsweise aus geschichtetem Elektroblech. Die Schichtung dient zusammen mit der einseitigen Isolierung der Blechpartien der Unterdrückung von unerwünschten Wirbelströmen. Bei drehenden Maschinen sind der Stator und der Rotor, bei manchen Maschinen auch als Anker bezeichnet, wesentliche Bestandteile. Die in beiden jeweils erzeugten Magnetfelder bewirken durch die damit erzeugten Kräfte eine gezielte, einmalige oder dauerhafte, Bewegung der Maschinenteile gegeneinander.

Zur elektrischen Isolation der stromdurchflossenen Teile gegeneinander und gegenüber der äußeren Umgebung weisen elektrische Maschinen Isolationsbereiche auf. Zur mechanischen Stabilisierung der Maschine dienen mechanische Trag- und Stützkonstruktionen sowie vorzugsweise Lager zur Führung von beweglichen Teilen.

Lagerschilde sind, meist bei Elektromaschinen, die entlang einer Drehachse hinteren beziehungsweise vorderen Deckel des Maschinengehäuses, die das Maschineninnere gegen Berührung schützen und die Lager der Wellenenden des Ankers aufnehmen. Sie sind präzise in das Stator-Gehäuse eingepasst, um einen möglichst gleichmäßigen Luftspalt zwischen Ständer und Anker zu gewährleisten. Beim Ausbau der Lagerschilde wegen Reparaturen oder Wartungsarbeiten kann deshalb die Einbaulage gekennzeichnet werden, um sie beim Zusammenbau wieder in genau der gleichen Lage zu montieren. Ein A-Lagerschild bezeichnet bevorzugt die Abtriebseite und trägt ein Festlager, ein B-Lagerschild ist bevorzugt an der Lüfterseite angeordnet, wobei die Lagerung über einen Schiebesitz erfolgt, um Wärmedehnungen des Ankers ausgleichen zu können.

Das Lager kann insbesondere ein Wälzlager sein, besonders bevorzugt ein Kugellager. Dabei umfasst das Wälzlager einen Innenring, einen Außenring sowie radial zwischen dem Innenring und dem Außenring angeordnete Wälzkörper.

Der Lagerring wird bevorzugt gestanzt, aus einem Bauteil gedreht, mechanisch bearbeitet, aus Guss oder mit einem ähnlichen Herstellungsverfahren hergestellt.

Erfindungsgemäß ist vorgesehen, dass mindestens eine Längsausnehmung parallel zur Drehachse und mindestens eine Längsausnehmung senkrecht zur Drehachse fluchtend zueinander angeordnet sind, wobei der Lagerring bevorzugt umfangsgemäß eine Vielzahl von Längsausnehmungen aufweist, die insbesondere über den Umfang des Lagerrings gleichmäßig verteilt sind. Fluchtend zueinander angeordnet bedeutet im Sinne der Erfindung, dass mindestens zwei derart angeordnete Längsausnehmungen jeweils eine Verbindung zur Fluidräumung bilden. Fluid kann somit entlang und quer zur Drehachse geräumt werden.

Gemäß einer bevorzugten Ausführungsform der Erfindung ist vorgesehen, dass der Lagerring ein separates Bauteil oder ein Außenring des Lagers ist. Die Ausgestaltung als separates Bauteil ermöglicht die Verwendung eines kostengünstigen Standardlagers. Die Ausgestaltung als separates Bauteil ermöglicht eine kompakte Bauweise.

Gemäß einer bevorzugten Ausführungsform der Erfindung ist vorgesehen, dass der Lagerring durch eine Zentrierungsfläche am Lagerschild positioniert ist. Dies ermöglicht eine einfache Montage und eine zuverlässige Räumung des Fluides. Gemäß einer bevorzugten Ausführungsform der Erfindung ist vorgesehen, dass das Lagerschild mindestens eine sich umfangsgemäß erstreckende Sammelausnehmung zur Fluidaufnahme aufweist. Die mindestens eine sich umfangsgemäß erstreckende Sammelausnehmung ist insbesondere in einem Bereich angeordnet, in dem sich Fluid per Schwerkraft sammelt und von dort ohne Fremdeinwirkung abfließend kann. Besonders bevorzugt gelangt Fluid möglichst direkt von der mindestens einen Längsausnehmung des Lagerrings in die Sammelausnehmung des Lagerschilds.

Gemäß einer bevorzugten Ausführungsform der Erfindung ist vorgesehen, dass das Lagerschild mindestens eine sich radial erstreckende Radialausnehmung aufweist, wobei die mindestens eine Radialausnehmung bevorzugt eine vertikale Haupterstreckungsachse aufweist. Als vertikale Haupterstreckungsachse ist eine solche Haupterstreckungsachse zu verstehen, die ein Abfließen von Fluid durch Schwerkraft ermöglicht. Besonders bevorzugt gelangt Fluid möglichst direkt von der Sammelausnehmung des Lagerschilds in die Radialausnehmung des Lagerschilds. Insbesondere leitet die Radialausnehmung das Fluid aus der elektrischen Maschine. Hierzu kann die Radialausnehmung das Fluid vertikal oder horizontal aus der elektrischen Maschine leiten. Eine solche Ausgestaltung ermöglicht eine kostengünstige, kompakte und zugleich zuverlässige Räumung von Fluid aus der elektrischen Maschine.

Gemäß einer bevorzugten Ausführungsform der Erfindung ist vorgesehen, dass die mindestens eine Längsausnehmung, die mindestens eine Sammelausnehmung und die mindestens eine Radialausnehmung einen Fluidkanal bilden, um Fluid aus der elektrischen Maschine zu leiten. Vorzugsweise können die Längsausnehmung parallel zur Drehachse und die Längsausnehmung radial zur Drehachse hierbei als eine gemeinsame Längsausnehmung betrachtet werden. Eine solche Ausgestaltung ermöglicht eine kostengünstige, kompakte und zugleich zuverlässige Räumung von Fluid aus der elektrischen Maschine.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine elektrische Maschine nach Stand der Technik,
- Fig. 2:: eine elektrische Maschine nach einer bevorzugten Ausführungsform der Erfindung,
- Fig. 3:: ein Lagerschild für eine elektrische Maschine nach Fig. 2,
- Fig. 4:: ein Lagerring für eine elektrische Maschine nach Fig. 2 in einer ersten perspektivischen Ansicht, und
- Fig. 5:: den Lagerring nach Fig. 4 in einer zweiten perspektivischen Ansicht.

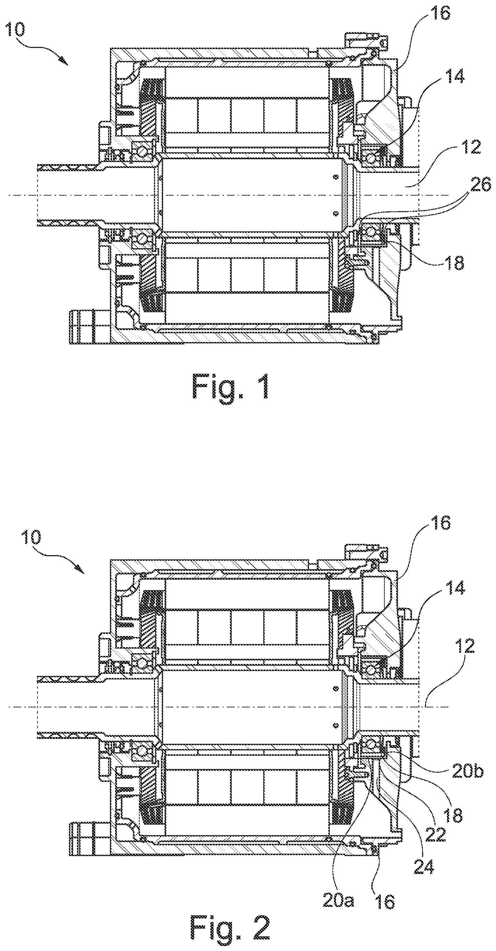

Figur 1 zeigt eine elektrische Maschine 10 für eine elektrisch betreibbare Achse eines Kraftfahrzeugs nach Stand der Technik.

Figur 2 zeigt eine bevorzugt ausgebildete elektrische Maschine 10 für eine elektrisch betreibbare Achse eines Kraftfahrzeugs, aufweisend
- eine Welle 12 mit einer Drehachse D,
- mindestens ein Lager 14, wobei die Welle 12 durch das mindestens eine Lager 14 drehbar gelagert ist,
- mindestens ein Lagerschild 16,
- mindestens einen Lagerring 18, der koaxial zur Drehachse D angeordnet ist, wobei das mindestens eine Lager 14 über den Lagerring 18 mit dem Lagerschild 16 verbunden ist, und wobei der Lagerring 18 außenseitig eine Vielzahl von Längsausnehmungen 20a, 20b zur Fluidräumung aufweist.

Durch die eine Vielzahl von Längsausnehmungen 20a, 20b im Lagerring 18 kann das Fluid, insbesondere Öl, in eine im Lagerschild 16 angeordneten Sammelausnehmung 22 fließen. In der Folge sammelt sich das Fluid in der Sammelausnehmung 22. Dies ist unabhängig von der Position des Lagerrings 18. Der Lagerring 18 kann durch eine Zentrierungsfläche am Lagerschild 16 positioniert werden. Danach kann das Fluid durch mindestens eine Radialausnehmung 24 im Lagerschild 16 abfließen und sammelt sich nicht mehr im Lagerbereich 26.

Das dargestellte Lagerschild 16 ist beispielhaft ein B-Lagerschild. B-Lagerschilde sind bevorzugt an der Lüfterseite einer elektrischen Maschine 10 angeordnet.

Gemäß einer bevorzugten Ausführungsform der Erfindung ist vorgesehen, dass eine Vielzahl von Längsausnehmungen 20a am äußeren Umfang des Lagerrings 18 parallel zur Drehachse D verlaufend angeordnet ist. Dies ist erkennbar in den Figuren 2, 4 und 5.

Gemäß einer bevorzugten Ausführungsform der Erfindung ist vorgesehen, dass eine Vielzahl von Längsausnehmungen 20b an einer Stirnseite des Lagerrings 18 senkrecht zur Drehachse D verlaufend angeordnet ist. Dies ist erkennbar in den Figuren 2, 4 und 5.

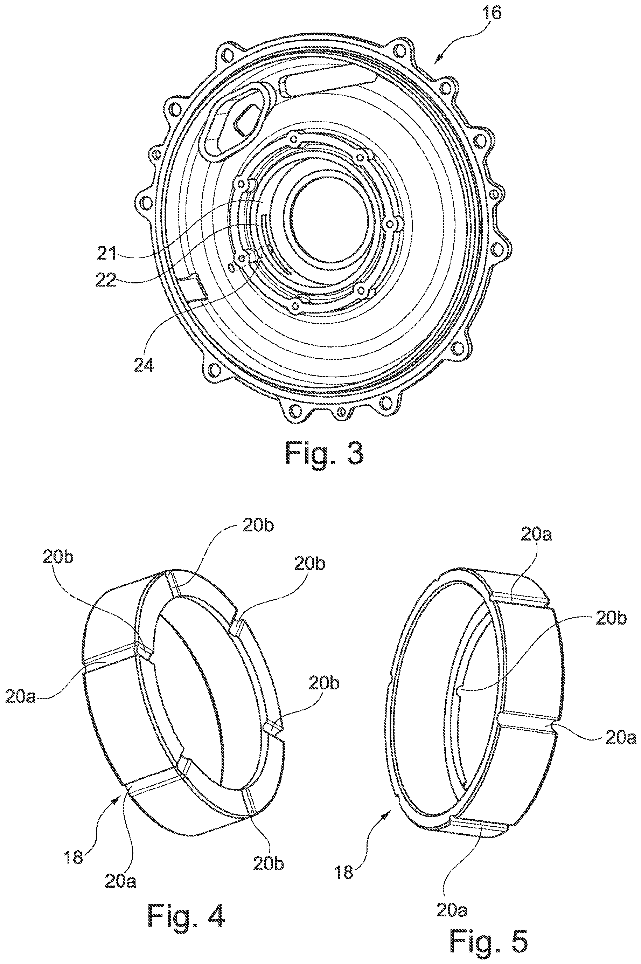

Gemäß einer bevorzugten Ausführungsform der Erfindung ist vorgesehen, dass eine Vielzahl von Längsausnehmungen 20a parallel zur Drehachse D und eine Vielzahl von Längsausnehmungen 20b senkrecht zur Drehachse D jeweils fluchtend zueinander angeordnet sind. Die Längsausnehmungen 20a, 20b sind insbesondere über den Umfang des Lagerrings 18 gleichmäßig verteilt. Dies ist erkennbar in den Figuren 4 und 5.

Gemäß einer bevorzugten Ausführungsform der Erfindung ist vorgesehen, dass der Lagerring 18 ein separates Bauteil ist. Dies ist erkennbar in den Figuren 2, 4 und 5.

Gemäß einer bevorzugten Ausführungsform der Erfindung ist vorgesehen, dass der Lagerring 18 durch eine Zentrierungsfläche 21 am Lagerschild 16 positioniert ist. Dies ist erkennbar anhand der Figuren 2, 3, 4 und 5.

Gemäß einer bevorzugten Ausführungsform der Erfindung ist vorgesehen, dass das Lagerschild 16 mindestens eine sich umfangsgemäß erstreckende Sammelausnehmung 22 zur Fluidaufnahme aufweist. Dies ist erkennbar in den Figuren 2 und 3.

Gemäß einer bevorzugten Ausführungsform der Erfindung ist vorgesehen, dass das Lagerschild 16 mindestens eine sich radial erstreckende Radialausnehmung 24 aufweist, wobei die mindestens eine Radialausnehmung 24 bevorzugt eine vertikale Haupterstreckungsachse aufweist. Dies ist erkennbar in den Figuren 2 und 3.

Gemäß einer bevorzugten Ausführungsform der Erfindung ist vorgesehen, dass die mindestens eine Längsausnehmung 20a, 20b, die mindestens eine Sammelausnehmung 22 und die mindestens eine Radialausnehmung 24 einen Fluidkanal bilden, um Fluid aus der elektrischen Maschine 10 zu leiten. Dies ist erkennbar anhand der Figuren 2, 3, 4 und 5.

### Bezugszeichenliste

- 10: Elektrische Maschine
- 12: Welle
- 14: Lager
- 16: Lagerschild
- 18: Lagerring
- 20a: Längsausnehmung parallel zur Drehachse
- 20b: Längsausnehmung radial zur Drehachse
- 21: Zentrierungsfläche
- 22: Sammelausnehmung
- 24: Radialausnehmung
- 26: Lagerbereich

- D: Drehachse der Welle

## Patentansprüche

1. Elektrische Maschine (10) für eine elektrisch betreibbare Achse eines Kraftfahrzeugs, aufweisend
- eine Welle (12) mit einer Drehachse (D),
- mindestens ein Lager (14), wobei die Welle (12) durch das mindestens eine Lager (14) drehbar gelagert ist,
- mindestens ein Lagerschild (16),
- mindestens einen Lagerring (18), der koaxial zur Drehachse (D) angeordnet ist, wobei das mindestens eine Lager (14) über den Lagerring (18) mit dem Lagerschild (16) verbunden ist, und wobei der Lagerring (18) außenseitig mindestens eine Längsausnehmung (20a, 20b) zur Fluidräumung aufweist. wobei die mindestens eine Längsausnehmung (20a, 20b) am äußeren Umfang des Lagerrings (18) parallel zur Drehachse (D) verlaufend oder an einer Stirnseite des Lagerrings (18) senkrecht zur Drehachse (D) verlaufend angeordnet ist.
**dadurch gekennzeichnet, dass**
die mindestens eine Längsausnehmung (20a) parallel zur Drehachse (D) und die mindestens eine Längsausnehmung (20b) senkrecht zur Drehachse (D) jeweils fluchtend zueinander angeordnet sind.

2. Elektrische Maschine (10) nach Anspruch 1, wobei der Lagerring (18) umfangsgemäß eine Vielzahl von Längsausnehmungen (20a, 20b) aufweist, die insbesondere über den Umfang des Lagerrings (18) gleichmäßig verteilt sind.

3. Elektrische Maschine (10) nach mindestens einem der vorhergehenden Ansprüche, wobei der Lagerring (18) ein separates Bauteil oder ein Außenring des Lagers (14) ist.

4. Elektrische Maschine (10) nach mindestens einem der vorhergehenden Ansprüche, wobei der Lagerring (18) durch eine Zentrierungsfläche (21) am Lagerschild (16) positioniert ist.

5. Elektrische Maschine (10) nach mindestens einem der vorhergehenden Ansprüche, wobei das Lagerschild (16) mindestens eine sich umfangsgemäß erstreckende Sammelausnehmung (22) zur Fluidaufnahme aufweist.

6. Elektrische Maschine (10) nach dem vorhergehenden Anspruch, wobei das Lagerschild (16) mindestens eine sich radial erstreckende Radialausnehmung (24) aufweist, wobei die mindestens eine Radialausnehmung (24) bevorzugt eine vertikale Haupterstreckungsachse aufweist.

7. Elektrische Maschine (10) nach mindestens einem der Ansprüche 1 bis 4, nach Anspruch 5 und nach Anspruch 6, wobei die mindestens eine Längsausnehmung (20a, 20b), die mindestens eine Sammelausnehmung (22) und die mindestens eine Radialausnehmung (24) einen Fluidkanal bilden, um Fluid aus der elektrischen Maschine (10) zu leiten.

8. Elektrisch betriebene Achse für ein Kraftfahrzeug mit einer elektrischen Maschine (10), **gekennzeichnet durch** die Merkmale der elektrischen Maschine (10) nach mindestens einem der vorhergehenden Ansprüche.

## Claims

1. An electrical machine (10) for an electrically operable axle of a motor vehicle, having
- a shaft (12) with an axis of rotation (D),
- at least one bearing (14), wherein the shaft (12) is rotatably mounted via at least one bearing (14),
- at least one end shield (16),
- at least one bearing ring (18), which is arranged coaxially with the axis of rotation (D),
wherein the at least one bearing (14) is connected to the end shield (16) via the bearing ring (18), and wherein the bearing ring (18) has at least one longitudinal recess (20a, 20b) on the outside for fluid evacuation.
wherein the at least one longitudinal recess (20a, 20b) is arranged on the outer circumference of the bearing ring (18) extending parallel to the axis of rotation (D) or on an end face of the bearing ring (18) extending perpendicular to the axis of rotation (D).
**characterised in that**
the at least one longitudinal recess (20a) parallel to the axis of rotation (D) and the at least one longitudinal recess (20b) perpendicular to the axis of rotation (D) are each arranged in alignment with one another.

2. The electrical machine (10) according to claim 1, wherein circumferentially the bearing ring (18) has a plurality of longitudinal recesses (20a, 20b), which are uniformly distributed in particular over the circumference of the bearing ring (18).

3. The electrical machine (10) according to any one of the preceding claims, wherein the bearing ring (18) is a separate component or an outer ring of the bearing (14).

4. The electrical machine (10) according to at least one of the preceding claims, wherein the bearing ring (18) is positioned on the end shield (16) by a centring surface (21).

5. The electrical machine (10) according to at least one of the preceding claims, wherein the end shield (16) has at least one circumferentially extending collecting recess (22) for receiving fluid.

6. The electrical machine (10) according to the preceding claim, wherein the end shield (16) has at least one radially extending radial recess (24), wherein the at least one radial recess (24) preferably has a vertical main axis of extension.

7. The electrical machine (10) according to at least one of claims 1 to 4, according to claim 5 and according to claim 6, wherein the at least one longitudinal recess (20a, 20b), the at least one collecting recess (22) and the at least one radial recess (24) form a fluid channel to guide fluid out of the electrical machine (10).

8. An electrically operable axle for a motor vehicle having an electrical machine (10), **characterised by** the features of the electrical machine (10) according to at least one of the preceding claims.

## Revendications

1. Moteur électrique (10) pour un essieu à fonctionnement électrique d'un véhicule automobile, présentant
- un arbre (12) avec un axe de rotation (D),
- au moins un palier (14), l'arbre (12) étant monté de manière rotative au moyen du au moins un palier (14),
- au moins un flasque (16),
- au moins une bague de palier (18) qui est agencée coaxialement à l'axe de rotation (D),
l'au moins un palier (14) étant relié au flasque (16) par l'intermédiaire de la bague de palier (18) et la bague de palier (18) présentant à l'extérieur au moins un évidement longitudinal (20a, 20b) pour l'évacuation des fluides.
l'au moins un évidement longitudinal (20a, 20b) étant agencé pour s'étendre parallèlement à l'axe de rotation (D) sur la circonférence extérieure de la bague de palier (18) ou perpendiculairement à l'axe de rotation (D) sur une face avant de la bague de palier (18).
**caractérisé en ce que**
l'au moins un évidement longitudinal (20a) est agencé parallèlement à l'axe de rotation (D) et l'au moins un évidement longitudinal (20b) est agencé perpendiculairement à l'axe de rotation (D), respectivement en alignement mutuel.

2. Moteur électrique (10) selon la revendication 1, dans lequel la bague de palier (18) présente sur sa circonférence une pluralité d'évidements longitudinaux (20a, 20b) qui sont en particulier répartis uniformément sur la circonférence de la bague de palier (18).

3. Moteur électrique (10) selon au moins l'une quelconque des revendications précédentes, dans lequel la bague de palier (18) est un composant séparé ou une bague extérieure du palier (14).

4. Moteur électrique (10) selon au moins l'une quelconque des revendications précédentes, **caractérisé en ce que** la bague de palier (18) est positionnée sur le flasque (16) au moyen d'une surface de centrage (21).

5. Moteur électrique (10) selon au moins l'une quelconque des revendications précédentes, dans lequel le flasque (16) présente au moins un évidement collecteur (22) s'étendant circonférentiellement pour recevoir du fluide.

6. Moteur électrique (10) selon la revendication précédente,dans lequel le flasque (16) présente au moins un évidement radial (24) s'étendant radialement, l'au moins un évidement radial (24) présentant de préférence un axe principal d'extension vertical.

7. Moteur électrique (10) selon au moins l'une quelconque des revendications 1 à 4, selon la revendication 5 et selon la revendication 6, dans lequel l'au moins un évidement longitudinal (20a, 20b), l'au moins un évidement collecteur (22) et l'au moins un évidement radial (24) forment un canal de fluide pour acheminer le fluide hors du moteur électrique (10).

8. Essieu à fonctionnement électrique pour un véhicule automobile comportant un moteur électrique (10), **caractérisé par** les caractéristiques du moteur électrique (10) selon au moins l'une quelconque des revendications précédentes.
